# FASCICULE DE BREVET EUROPEEN

(11) **EP 3 428 058 B1**
(45) Date de publication et mention de la délivrance du brevet: **28.08.2019**
(21) Numéro de dépôt: 18178297.0
(22) Date de dépôt: 18.06.2018
(51) Int. Cl.: B64C 1/18, B64D 13/00, F24F 13/02, B64C 1/06, B64D 17/10, B64D 11/00

(54) **FUSELAGE ET AERONEF COMPORTANT UNE SOUS-STRUCTURE MULTIFONCTIONNELLE DE DISTRIBUTION D'AIR ET PROCEDE D'ASSEMBLAGE**
RUMPF UND LUFTFAHRZEUG MIT EINER MULTIFUNKTIONALEN LUFTVERTEILUNGSSUBSTRUKTUR UND VERFAHREN ZUR MONTAGE
FUSELAGE AND AIRCRAFT COMPRISING A MULTIFUNCTIONAL AIR DISTRIBUTION SUB-STRUCTURE AND METHOD OF ASSEMBLY

(30) Priorité: 11.07.2017 FR 1756554
(43) Date de publication de la demande: 16.01.2019
(73) Titulaire: Airbus (S.A.S.), 31700 Blagnac (FR)
(72) Inventeur: BERMUDEZ, Michel, 92150 SURESNES (FR); THOMAS, Bruno, 75015 PARIS (FR); GUIMARD, Jean-Mathieu, 78125 VIEILLE EGLISE EN YVELINES (FR)
(74) Mandataire: Sarraméa, Claude

(56) Documents cités:
- WO-A1-2007/057411
- DE-A1-102007 036 763
- US-A1- 2008 210 820
- US-A1- 2013 009 007
- US-B2- 9 284 036

## Description

La présente invention relève du domaine de l'ingénierie des structures de fuselages d'aéronef. L'invention concerne en particulier un fuselage et un aéronef comportant une sous-structure multifonctionnelle comprenant un conduit d'un système de distribution d'air combiné à des structures de support de plancher cabine du fuselage et/ou à des rails de fixation de siège.

Dans les aéronefs, en particulier dans les avions la structure d'un plancher passagers est supporté par des bielles de liaison disposées entre les traverses et les cadres du fuselage. Ces bielles de liaison délimitent une zone de section sensiblement triangulaire qui est formée entre le plancher passager, le cadre du fuselage et les bielles de plancher. Le volume d'espace disponible dans cette zone dite « triangle » est assez réduit et difficile d'accès mais il est néanmoins exploité pour agencer de multiples composants et systèmes nécessaires pour le fonctionnement de l'aéronef sans affecter l'esthétique de la cabine passagers ni encombrer la soute.

Nous retrouvons typiquement agencés dans la zone « triangle » des composants tels que des tuyaux pour l'air du système de climatisation, des faisceaux du réseau d'électricité, des conduites d'eau, des extincteurs etc. Le volume réduit disponible, et la nécessité d'agencer autant d'éléments pose plusieurs problèmes, notamment lors de l'installation de ces composants (dans le contexte de l'augmentation des cadences de fabrication) et lors des opérations de maintenance.

L'installation des divers systèmes dans la structure du fuselage requière l'assemblage individuel des différents composants desdits systèmes assurant typiquement une fonction système unique. Par exemple, l'air cabine dans les aéronefs est généralement distribué par des tuyauteries rigides en composite de fibres de verre et de résine phénolique, connectées entre elles par des manchons de raccordement. Ces tuyauteries de relativement grosses sections sont de structure très légère, fragile, ce qui rend leur mise en place particulièrement délicate et coûteuse en temps d'installation.

Réaliser des opérations de maintenance ou de réparation dans la zone triangle s'avère difficile du fait de l'espace réduit restant disponible pour qu'une personne accède et manipule dans cette zone. Ces opérations deviennent donc longues et couteuses, ainsi que fastidieuses pour les personnes les réalisant. Ainsi intervenir sur des tuyaux de climatisation particulièrement fragiles et volumineux est délicat et de plus, ces grosses tuyauteries rendent plus difficile l'installation et l'accès des autres systèmes et leurs maintenabilités dans la zone triangle.

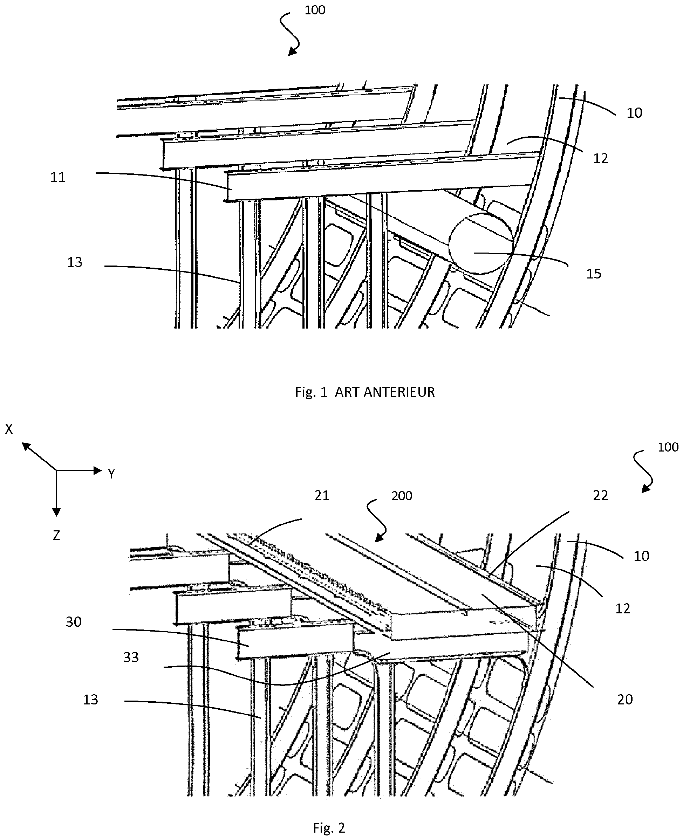

La structure de la zone triangle d'un aéronef est illustrée à la figure 1 montrant une vue partielle d'un fuselage en vue isométrique dont la structure correspond à la structure typique des fuselages des aéronefs actuellement en service. La structure du fuselage est présentée de manière simplifiée et montre les cadres 10, le revêtement du fuselage 12 et les bielles de renfort 13 supportant les traverses 11 supportant le plancher (non illustré). Dans cette structure, un conduit de climatisation de section circulaire 15 est agencé à l'intérieure de la zone dite « triangle », formée entre les cadres 10 et revêtement du fuselage 12, les bielles de renfort 13 et les traverses 11. Les autres systèmes ne sont pas représentés ici.

De nos jours, un des objectifs dans la conception des nouveaux fuselages est qu'ils puissent être assemblés dans un temps réduit respectant les cadences accrues et de façon simplifiée, tout en permettant une optimisation du volume occupé et de la masse totale de la structure. C'est dans ce contexte, qu'est née l'idée d'utiliser des sous-structures multifonctionnelles dans la conception d'un aéronef permettant de réduire le nombre total des composants individuels à installer dans la structure du fuselage.

La demande internationale WO2016/079226 décrit un conduit pour former des canalisations de circulation d'air dans une structure pouvant fixer des conducteurs électriques. Le brevet FR 0958371 décrit un élément structurel en matériau composite, par exemple un fuselage ou un plancher, capable de transporter une puissance électrique.

Toutefois dans ces solutions, il n'est mis à profit que de combiner les fonctions électriques à des tuyauteries d'air sans améliorer le problème de l'installation de ces tuyauteries qui est d'autant plus complexe en raison des problèmes de raccordements électriques.

Si ces solutions permettent de réduire le nombre de composants pour installer un système déterminé dans un aéronef, l'installation et l'agencement des composants dans le fuselage n'apportent pas d'avantages significatifs quant aux gains de volume et à la facilité des opérations d'installation et/ou maintenance desdits composants.

Les documents US2013/009007, US2008/210820, US9284036, WO2007/057411 et DE10 2007 036763 décrivent également des planchers d'aéronef selon l'art antérieur.

### EXPOSE DE L'INVENTION :

La présente invention a donc pour but de simplifier et réduire le temps d'assemblage d'un fuselage d'aéronef, ainsi que d'optimiser son agencement pour gagner du volume d'espace libre essentiellement dans la zone triangle et faciliter les opérations de maintenance et réparation y afférant.

L'invention a pour but également de réduire le nombre de références de pièces nécessaires pour assembler un fuselage et de réduire les coûts de main d'oeuvre de son assemblage et éventuelle réparation et entretien associés.

A cet effet, l'invention propose un fuselage aménagé de manière optimisée et comportant une sous-structure multifonctionnelle permettant d'intégrer les conduits d'un système de distribution d'air avec des composants structuraux et/ou fonctionnels.

Plus particulièrement l'invention propose un fuselage d'aéronef comportant un revêtement de fuselage, des traverses supportant un plancher de l'aéronef et une sous-structure multifonctionnelle, caractérisé en ce que ladite sous-structure multifonctionnelle est fixée à au moins une des traverses dans une partie abaissée de ladite traverse et en ce que ladite sous-structure multifonctionnelle comprend :
- au moins un conduit d'un système de distribution d'air ayant une section sensiblement rectangulaire à l'emplacement de ladite au moins une traverse et ayant des parois latérales dudit conduit sensiblement verticales ;
- un rail de fixation de siège ou un raidisseur fixé sur une première paroi latérale dudit conduit de la sous-structure multifonctionnelle, et
- un rail de fixation de siège ou un raidisseur fixé sur une deuxième paroi latérale, opposée à la première paroi latérale, dudit conduit de la sous-structure multifonctionnelle.

En effet, il est possible de maintenir une iso-performance d'écoulement des fluides (même perte de charge et même débit) lors du passage d'une section circulaire à une section équivalente légèrement supérieure et de type rectangulaire. Il est ainsi possible de substituer le tuyau classique de section circulaire avec le conduit de section sensiblement rectangulaire selon l'invention et d'effectuer la distribution d'air à travers l'aéronef.

Le conduit de section sensiblement rectangulaire est assemblé sur chaque bord longitudinal avec un rail de fixation de siège et un profilé raidisseur support de plancher. Alternativement, ledit conduit peut être assemblé sur chaque bord longitudinal avec des rails de fixations de siège ou avec des profilés raidisseurs de support de plancher.

L'assemblage du conduit de section sensiblement rectangulaire avec d'autres composants structuraux et/ou fonctionnels permet l'obtention de la sous-structure multifonctionnelle permettant l'assemblage simultané des raidisseurs, des rails de siège et de tuyaux du système de distribution d'air. De plus, la sous-structure multifonctionnelle est agencée entre les traverses et le plancher permettant l'accès aux conduits de distribution d'air depuis la cabine de passagers, ainsi que leur réparation ou maintenance sans besoin d'accéder à l'intérieur de la zone triangle.

Le fuselage de l'invention peut comporter également toutes ou partie des caractéristiques suivantes considérées isolément ou en toute combinaison techniquement opérable.
- Le plancher recouvre tout ou partie de la sous-structure multifonctionnelle, ledit plancher prenant appui sur le ou les rails de fixation de siège et/ ou sur le ou les profilés raidisseurs.
- Une face supérieure de la partie abaissée de la traverse est située a une hauteur DH, sous un niveau défini par des parties non abaissées de la dite traverse, adaptée pour recevoir la sous-structure multifonctionnelle intégrant le conduit compte tenu d'une hauteur de ladite sous-structure dont une surface de la section répond à des exigences du système de distribution d'air.
- Le conduit a une hauteur variable en fonction de la position longitudinale dans le fuselage, et dans lequel la partie abaissée des traverses est commune à plusieurs poutres pour répondre à la hauteur la plus grande dudit conduit sous une longueur donnée dudit conduit.
- La sous-structure multifonctionnelle comprend au moins un rail de fixation de siège et dans laquelle la paroi latérale du conduit à laquelle est fixé ledit rail comporte une aile médiane d'extension longitudinale. La dite aile médiane permet la fixation du rail de fixation de siège à ladite paroi du conduit.
- La sous-structure multifonctionnelle comporte en outre au moins un raidisseur longitudinal fixé a une face supérieure du conduit.
- La sous-structure multifonctionnelle a une largeur sensiblement égale à une distance souhaitée entre la position du profilé raidisseur, pour supporter un bord externe d'un panneau de plancher le long du revêtement du fuselage, et un premier rail de fixation de siège, en partant dudit revêtement du fuselage en direction d'un axe longitudinal du fuselage.
- Le conduit intègre dans une paroi dudit conduit des semi-produits ayant de fonctions électriques et/ou des conducteurs électriques
- Le conduit est réalisé en fibres électriquement isolantes imprégnées en résine.
- Le rail de fixation de siège et/ou le profilé raidisseur sont réalisés en matériaux composites et/ou en alliage métallique.
- La sous-structure multifonctionnelle est pré-assemblée par une technique de pultrusion et/ou de collage.

L'invention vise également un procédé d'assemblage d'un fuselage comportant l'utilisation d'une sous-structure multifonctionnelle préassemblée. Dans un mode de mise en oeuvre, la sous-structure multifonctionnelle est assemblée au-dessus des traverses avant la pose de panneaux plancher recouvrant la dite sous structure.

L'invention vise également un aéronef comportant au moins une section d'un fuselage selon l'invention.

### DESCRIPTION DETAILLEE :

L'invention est décrite en référence aux figures qui suivent. Celles-ci ne sont présentées qu'à titre indicatif et non limitative de l'invention. Les figures montrent :
Figure 1 : Une vue partielle du fuselage en vue isométrique comportant un conduit d'un système de distribution d'air selon un montage conventionnel sous les traverses dans la zone triangle.
Figure 2 : Une vue partielle du fuselage en vue isométrique comportant une sous-structure multifonctionnelle selon l'invention.
Figure 3 : une vue schématique en section de la sous-structure multifonctionnelle assemblée entre le plancher passager et les traverses.
Figure 4 : une vue isométrique schématique des composants de la sous-structure multifonctionnel; en vue éclatée, détail a) et en vue assemblée, détail b).

Pour la suite de la description, on définit un axe longitudinal X comme l'axe principal d'un fuselage, en général l'axe longitudinal d'un avion en vol. De même, on définit un axe transversal Y perpendiculaire à l'axe longitudinal en pratique parallèle au plan du plancher de la cabine d'avion. Enfin, un axe vertical Z complète le repère.

La figure 2 montre une vue isométrique d'une partie de section de fuselage selon l'invention où seul les éléments principaux des structures sont représentés sous une forme simplifiée pour la clarté de l'illustration. La figure montre un fuselage 100 comprenant des cadres 10, un revêtement du fuselage 12, des bielles 13 de renfort supportant des traverses 30 et s'appuyant sur une partie inférieure du cadre du fuselage (zone non visible sur le dessin).

Le fuselage 100 comporte une sous-structure multifonctionnelle 200 intégrant un conduit 20 d'un système de distribution d'air de section rectangulaire. Ledit conduit 20 comporte sur une paroi latérale interne un rail 21 servant à fixer la structure de sièges passagers et, sur une paroi latérale externe un profilé raidisseur 22 servant à supporter des panneaux de plancher 40. La sous-structure multifonctionnelle 200 est positionnée au dessus des traverses 30, plus particulièrement dans une partie abaissée 33 d'une hauteur DH située à une extrémité des traverses reliées au cadre du fuselage 10, en particulier au dessus de la zone triangle entre la bielle 13 et le cadre 10.

L'abaissement de la traverse 30 dans la partie abaissée 33 concerne principalement une surface inférieure de la dite traverse pour permettre une hauteur voulue du conduit 20. Dans la forme de réalisation représentée sur la figure 2, une surface supérieure de la traverse est également abaissée pour conserver une section sensiblement constante de la traverse par rapport à la partie non abaissée.

Il doit être remarqué que la largeur du conduit 20 de section rectangulaire, est déterminée sensiblement par la distance séparant le dernier rail pour sièges passagers de la cabine du côté d'une paroi du fuselage considérée et un bord latéral extérieur du plancher de la cabine, également du côté de la paroi du fuselage considérée. Cette largeur du conduit détermine donc la hauteur du conduit pour obtenir la section nécessaire dudit conduit pour assurer un débit souhaité et par suite la valeur DH de l'abaissement 33. Il doit être noté que la section du conduit 20 n'est généralement pas constant suivant la position dans l'axe X du fuselage d'un même avion et que donc la hauteur dudit conduit peut varier d'un cadre à un autre ainsi que possiblement la valeur de DH.

L'invention propose donc un nouvel agencement des conduits d'un système de distribution d'air au sein de la structure du fuselage d'un aéronef. Ce nouvel agencement est possible grâce à la réalisation du conduit 20 avec une section rectangulaire lui permettant d'intégrer des fonctions structurelles de support du plancher et des sièges. La nécessité de supports additionnels est éliminée ou réduite pour la fixation du conduit 20 facilitant ainsi son installation par le dessus des traverses, avant la pose des panneaux de plancher.

Toutefois, il est possible de varier la forme et section du conduit pour lui permettre de s'adapter aux différents volumes de l'espace disponibles le long du fuselage selon l'axe X. Le conduit 20 pourra avoir n'importe quelle forme permettant le débit des fluides d'un système de distribution d'air souhaité et la capacité d'intégrer des éléments structuraux et/ou fonctionnels sur ses parois latérales, tels qu'un profilé raidisseur et/ou un rail de fixation de siège.

Le temps d'installation du nouveau conduit 20 de section rectangulaire est donc significativement réduit et permet de dégager des volumes d'espace libre dans la zone triangle du fuselage. De plus, l'assemblage du fuselage est optimisé, car l'utilisation d'une sous-structure multifonctionnelle 200 selon l'invention permet d'assembler avec une seule pièce les conduits de distribution d'air et des composants structuraux et/ou fonctionnels tels que les rails de siège et les profilés raidisseurs.

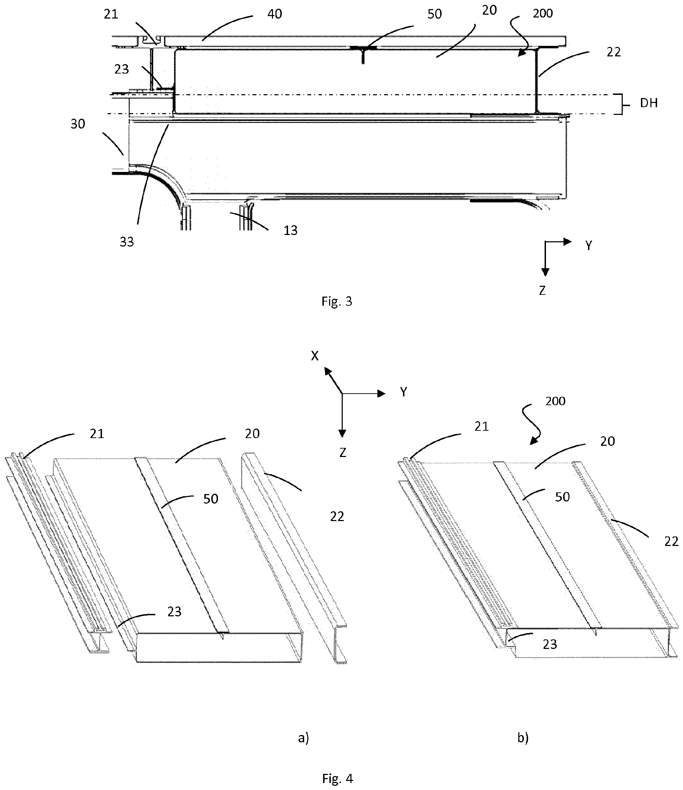

La figure 3 montre de manière schématique des détails de la sous-structure multifonctionnelle 200 entre le plancher passager 40 et les traverses 30.

Le placement du plancher passager se fait de manière à ce que les efforts du plancher soient repris sur le rail 21 de fixation de siège et sur le profilé raidisseur 22, tous les deux intégrés respectivement sur chacune des parois latérales du conduit 20. A cet effet, la sous-structure multifonctionnelle 200 est positionnée sur la partie abaissée 33 formée dans les extrémités des traverses 30, dans l'exemple illustré, dans les extrémités reliées aux cadres 10 du fuselage. Cette partie abaissée 33 présente dans la traverse 30 permet d'obtenir la section souhaitée du conduit et l'intégration du rail 21 de fixation de siège et du profilé raidisseur 22 permettant de transférer les efforts du plancher passagers aux traverses 30 par le rail 21 de fixation de siège et par le profilé raidisseur 22 assurant au conduit 20 une certaine raideur structurale requise.

La largeur de la partie abaissée 33 est telle qu'elle permet au moins le placement en largeur de la sous-structure multifonctionnelle 200, cette dernière ayant une largeur correspondante à la distance entre le profilé raidisseur rejoignant le cadre 10 et le placement du premier rail de fixation de siège en partant du cadre 10 du fuselage vers le centre de la cabine dans l'axe transversal Y.

La sous-structure multifonctionnelle 200 peut intégrer optionnellement un ou plusieurs profilés raidisseurs tel que le profilé 50 de forme T de l'exemple de réalisation représenté aux figures 2 et 3 sur une face supérieure du conduit 20, à l'interface entre le conduit 20 et le plancher passager 40 permettant d'assurer une portée moindre des possibles efforts transmis par le plancher au conduit et, de stabiliser la forme de la paroi du conduit.

La figure 4 montre : détail a) une vue éclatée du conduit et, détail b) une vue de la sous-structure du conduit multifonctionnel 200 assemblée. Le conduit 20 a une section rectangulaire destinée à transporter les fluides d'air.

Une surface de la section du conduit correspond au moins à une surface équivalente d'un conduit traditionnel de section circulaire dont il doit avoir les mêmes performances aéroliques, c'est-à-dire assurant une iso-performance de débit d'air entre lesdits conduits. Il est fréquemment mis en oeuvre dans des conduits 20 une section de l'ordre de 250 cm², mais en pratique, suivant l'aéronef et suivant l'emplacement dans l'aéronef, la surface de la section peut être sensiblement différente.

La forme du conduit 20 de section rectangulaire permet quant à elle d'intégrer aisément des éléments structuraux sur sa surface comme le rail 21 de fixation de siège et le profilé de raidisseur 22. Par exemple, la paroi latérale du conduit 20 intégrant sur sa surface le rail de fixation de siège comprend une aile latérale médiane 23 permettant l'encastrement du rail de fixation de siège dont le profil est aujourd'hui normalisé. D'autre part, la paroi latérale intégrant le profilé raidisseur présente avantageusement une surface plane simple permettant de fixer une face d'une aile d'un profilé raidisseur en I, en U ou en H par collage.

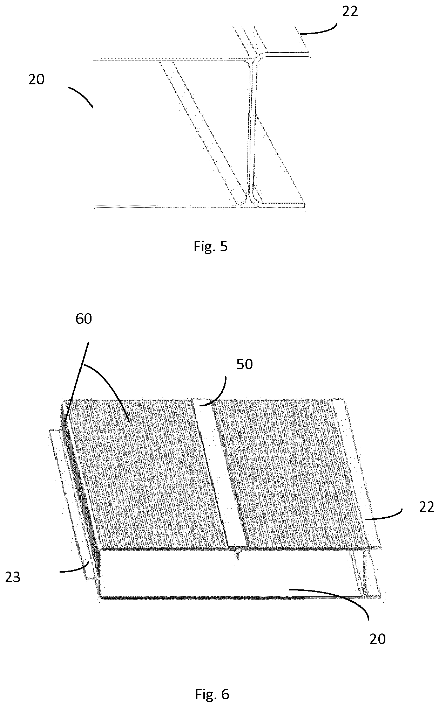

La hauteur du conduit 20 est choisie de manière à assurer une section permettant un débit souhaité des fluides d'air ainsi que pour permettre au plancher d'être posé sur le profilé raidisseur de la sous-structure multifonctionnelle 200. La hauteur du conduit 20 sera donc légèrement inférieure que celle du raidisseur 22 s'intégrant sur une des parois latérales du conduit. La figure 5 illustre la légère différence en hauteur du conduit 20 et du profilé raidisseur 22 intégré audit conduit afin que le plancher repose sur le raidisseur et non sur la surface supérieure du conduit 20.

La sous-structure multifonctionnelle 200 est fabriquée comme une sous-structure pré-assemblée intégrant un conduit 20 de section rectangulaire, le rail 21 de fixation de siège et le profilé raidisseur 22. Il est possible également d'intégrer au conduit 20 un rail 21 de fixation de siège sur chaque côté ou d'intégrer sur chaque côté un profilé raidisseur 22. Par ailleurs, la section du conduit 20 qui est représentée sur les illustrations comme constante n'est pas nécessairement constante.

Dans un mode de réalisation, le conduit 20 est capable d'intégrer d'autres éléments structuraux et/ou fonctionnels selon les besoins de l'aéronef. Par exemple il est possible d'intégrer des semi-produits ayant des fonctions électriques sur la surface ou le coeur du conduit 20. Ce mode de réalisation est illustré par la figure 6 montrant une vue en perspective d'un conduit 20 de section rectangulaire intégrant sur sa surface des semi-produits ayant des fonctions de conductivité électrique et un profilé raidisseur 22.

Le conduit 20 est par exemple réalisé principalement en fibres de verre imprégnées de résine, le conduit ayant une faible épaisseur permettant d'obtenir un conduit léger et de formes complexes pour s'adapter aux différents espaces disponibles le long du fuselage, ainsi qu'aux courbures imposées par la forme du fuselage ou une trajectoire à suivre sous le plancher de la cabine. Le conduit 20 aura donc, autant que besoin, une forme autre que cylindrique selon les besoins spécifiques d'installation dans un espace déterminé.

Le rail 21 de fixation de siège et le profilé raidisseur 22 sont de manière générale réalisés en matériau composite (thermodurcissable ou thermoplastique) ou en métal tel qu'un alliage d'aluminium.

Le conduit 20 associé avec le ou les rails 21 de fixation de siège et/ou le ou les profilés raidisseur 22 forme la sous-structure multifonctionnelle 200 dont la fabrication peut être réalisée grâce à la technologie de pultrusion. La pultrusion est un procédé mis en oeuvre pour réaliser en continu des tubes ou des profilés en matériaux composites. Lors de la mise en oeuvre de ce procédé, des fibres (mats ou tissus en bandes) conditionnées en bobine sont successivement imprégnées de résine et mis à la forme souhaitée par passage à travers des filières régulées en température et pression.

La fabrication de la sous-structure multifonctionnelle 200 selon l'invention peut être réalisée également grâce à un procédé automatisé combinant fabrication et assemblage en continu. Les techniques de collage (de l'anglais « *bonding technology* ») ou de surmoulage peuvent ainsi être utilisées pour l'assemblage du conduit 20 de distribution d'air 20, du rail 21 de fixation de siège et du profilé raidisseur 22.

Plusieurs variantes d'assemblage peuvent être envisagées selon l'invention. Par exemple :
- Fabriquer dans une première étape le ou les rails 21 de fixation de siège et le ou les profilés raidisseur 22 de façon conventionnel (extrusion, usinage, etc) en alliage métallique. Ensuite, dans une deuxième étape appliquer le procédé de pultrusion pour réaliser le conduit en insérant le rail de fixation de siège et les profilés dans la filière de façon à avoir une connexion intime entre les trois éléments, c'est-à-dire, entre le conduit, un rail de fixation de siège et un profilé raidisseur ou, entre le conduit et deux rails de fixation siège ou deux profilés raidisseurs. Le cas échéant intégrant également les semi produits de conductivité électrique lors du procédé de pultrusion.
- Fabriquer dans une première étape le ou les rails de siège et/ou le ou les profilés raidisseur. Les rails ou les raidisseurs peuvent être réalisés en matériau composite (RTM injection, pultrusion, braiding, etc) et/ou en alliage métallique. Ensuite, dans une deuxième étape appliquer le procédé de pultrusion pour réaliser le conduit en insérant le rail de fixation de siège et le profilé dans la filière de façon à avoir une connexion intime entre les trois éléments ou, insérant un conduit et deux rails de fixation siège ou deux profilés raidisseurs. Le cas échéant intégrant également les semi produits de conductivité électrique lors du procédé de pultrusion.

Le conduit de 20 pourra bien entendu intégrer d'autres éléments structuraux et/ou fonctionnels tels que le raidisseur 50, des renforts locaux, des prises de prélèvement d'air, pièces de raccordement de section de tube pour acheminement de l'air en cabine, etc.

La sous-structure multifonctionnelle ainsi obtenue pourra être intégrée dans un fuselage 100 d'aéronef sur tout ou partie du fuselage dans sa longueur.

Le fuselage proposé présente de nombreux avantages en comparaison des fuselages actuellement dans le commerce, par exemple :
- Réduction du temps d'assemblage de la structure du fuselage
- Réduction du temps d'installation de systèmes tels que le système de distribution d'air et du système électrique de basse intensité.
- Remplacement des conduites conventionnelles de section circulaire d'un système de distribution d'air par un conduit de section rectangulaire, tout en conservant un flux d'air maintenu à iso-performance entre lesdits conduits.
- Réduction du nombre de pièces individuelles d'assemblage du fuselage, notamment passage d'un assemblage d'au moins trois composants à un assemblage d'une seule sous-structure pré assemblée hors ligne.
- Suppression d'interfaces entre la structure et les éléments substitués e.g supports du système de distribution d'air, des câbles électriques etc.
- Réduction des coûts d'assemblage de la structure du fuselage
- Rendre disponible de nouveaux volumes d'espace (pour l'allocation d'autres systèmes), notamment dans la zone triangle du fuselage ;
- Accès plus facile pour effectuer des travaux de réparation et de maintenance aux systèmes encore présents dans la zone triangle du fuselage, ou sous le plancher en général ;
- Positionnement des conduits d'un système de distribution d'air dans l'aire mitoyenne de la cabine et accès a leurs réparation et opération de maintenance depuis la cabine après démontage d'un panneau du plancher (facilité d'accès).
- Automatisation d'opérations de fabrication et assemblage de sous-composants grâce à une fabrication de la sous-structure multifonctionnelle par pultrusion.

L'invention peut prendre d'autres formes de réalisation. Par exemple l'agencement de la sous-structure multifonctionnelle appliquée indépendamment de l'utilisation des bielles de renfort du plancher. La sous-structure multifonctionnelle peut être agencée dans une autre partie que dans les extrémités des traverses par exemple, entre deux rails de fixation de siège, le second rail assemblé comme le premier et venant en remplacement du profil raidisseur 22.

Dans une autre forme de réalisation, le conduit qui présente avantageusement une section rectangulaire lorsque sa section est considérée au niveau d'une traverse présente des variations de formes et/ou de sections entre deux traverses. En particulier de telles variations de forme et/ou de section correspondent à des emplacements d'ouvertures de distribution de l'air le long du conduit ou encore à des exigences de montage pour éviter des interférences avec des structures ou d'autres systèmes.

## Revendications

1. Fuselage d'aéronef comportant un revêtement de fuselage, des traverses (30) supportant un plancher (40) de l'aéronef, et une sous-structure multifonctionnelle (200), **caractérisé en ce que** ladite sous-structure multifonctionnelle (200) est fixée à au moins une des traverses (30) dans une partie abaissée (33) de ladite traverse (30) et **en ce que** ladite sous-structure multifonctionnelle comprend :
- au moins un conduit (20) d'un système de distribution d'air ayant une section sensiblement rectangulaire à l'emplacement de ladite au moins une traverse (30) et ayant des parois latérales dudit conduit (20) sensiblement verticales ;
- un rail (21) de fixation de siège ou un profilé raidisseur fixé sur une première paroi latérale (20) dudit conduit de la sous-structure multifonctionnelle (200), et
- un rail (21) de fixation de siège ou un profilé raidisseur (22) fixé sur une deuxième paroi latérale, opposée à la première paroi latérale, dudit conduit (20) de la sous-structure multifonctionnelle (200).

2. Un fuselage selon la revendication 1, dans lequel le plancher (40) recouvre tout ou partie de la sous-structure multifonctionnelle (200), ledit plancher prenant appui sur le ou les rails (21) de fixation de siège et/ ou sur le ou les profilés raidisseurs (22).

3. Un fuselage selon l'une des revendications antérieures, dans lequel une face supérieure de la partie abaissée (33) de la traverse (30) est située a une hauteur DH, sous un niveau défini par des parties non abaissées de ladite traverse, adaptée pour recevoir la sous-structure multifonctionnelle (200) intégrant le conduit (20) compte tenu d'une hauteur de ladite sous-structure dont une surface de la section répond à des exigences du système de distribution d'air.

4. Un fuselage selon la revendication 3, dans lequel le conduit (20) a une hauteur variable en fonction de la position longitudinale dans le fuselage, et dans lequel la partie abaissée (33) des traverses (30) est commune à plusieurs poutres pour répondre à la hauteur la plus grande dudit conduit (20) sous une longueur donnée dudit conduit (20).

5. Un fuselage selon l'une des revendications 1 à 4, dans lequel la sous-structure multifonctionnelle (200) comprend au moins un rail (21) de fixation de siège et dans lequel la paroi latérale du conduit (20) à laquelle est fixée ledit rail comporte une aile médiane (23) d'extension longitudinale, par laquelle aile médiane le rail (21) de fixation de siège est fixé à ladite paroi du conduit (20).

6. Un fuselage selon l'une des revendications 1 à 5, dans lequel la sous-structure multifonctionnelle (200) comporte en outre au moins un raidisseur longitudinal (50) fixé ou étant intégré à une face supérieure du conduit (20).

7. Un fuselage selon l'une des revendications 1 à 6, dans lequel la sous-structure multifonctionnelle (200) a une largeur sensiblement égale à une distance souhaitée entre la position du profilé raidisseur (22), pour supporter un bord externe d'un panneau de plancher le long du revêtement du fuselage (12), et un premier rail de fixation de siège, en partant dudit revêtement du fuselage en direction d'un axe longitudinal du fuselage.

8. Un fuselage selon l'une des revendications 1 à 7, dans lequel le conduit (20) intègre, dans une paroi dudit conduit, des conducteurs électriques.

9. Un fuselage selon l'une des revendications 1 à 8, dans lequel le conduit (20) est réalisé en fibres électriquement isolantes imprégnées en résine.

10. Un fuselage selon l'une des revendications 1 à 9, dans lequel le rail (21) de fixation de siège et/ou le profilé raidisseur sont réalisés en matériaux composites et/ou en alliage métallique.

11. Un fuselage selon l'une des revendications 1 à 10, dans lequel la sous-structure multifonctionnelle (200) est pré-assemblée par une technique de pultrusion et/ou de collage, et/ou de surmoulage.

12. Procédé d'assemblage d'un fuselage conforme à l'une des revendications 1 à 11, comportant l'utilisation d'une sous-structure multifonctionnelle (200).

13. Procédé d'assemblage d'un fuselage suivant la revendication 12 dans lequel la sous-structure multifonctionnelle (200) est assemblée sur les traverses (30) avant la pose de panneaux plancher recouvrant la dite sous structure.

14. Aéronef comportant au moins une section d'un fuselage selon l'une des revendications 1 à 11.

## Patentansprüche

1. Rumpf eines Luftfahrzeugs, welcher eine Rumpfverkleidung, Querträger (30), die einen Boden (40) des Luftfahrzeugs stützen, und eine multifunktionale Substruktur (200) aufweist, **dadurch gekennzeichnet, dass** die multifunktionale Substruktur (200) an wenigstens einem der Querträger (30) in einem abgesenkten Teil (33) des Querträgers (30) befestigt ist, und dadurch, dass die multifunktionale Substruktur umfasst:
- wenigstens eine Leitung (20) eines Luftverteilungssystems, die an der Stelle des wenigstens einen Querträgers (30) einen im Wesentlichen rechteckigen Querschnitt aufweist und im Wesentlichen vertikale Seitenwände der Leitung (20) aufweist;
- eine Sitzbefestigungsschiene (21) oder ein Versteifungsprofil, die bzw. das an einer ersten Seitenwand (20) der Leitung der multifunktionalen Substruktur (200) befestigt ist, und
- eine Sitzbefestigungsschiene (21) oder ein Versteifungsprofil (22), die bzw. das an einer der ersten Seitenwand gegenüberliegenden zweiten Seitenwand der Leitung (20) der multifunktionalen Substruktur (200) befestigt ist.

2. Rumpf nach Anspruch 1, wobei der Boden (40) die multifunktionale Substruktur (200) ganz oder teilweise bedeckt, wobei sich der Boden auf der oder den Sitzbefestigungsschienen (21) und/oder auf dem oder den Versteifungsprofilen (22) abstützt.

3. Rumpf nach einem der vorhergehenden Ansprüche, wobei sich eine Oberseite des abgesenkten Teils (33) des Querträgers (30) auf einer Höhe DH unter einem durch nicht abgesenkte Teile des Querträgers definierten Niveau befindet, die dafür ausgelegt ist, die multifunktionale Substruktur (200) aufzunehmen, in welche unter Berücksichtigung einer Höhe der Substruktur die Leitung (20) integriert ist, von der eine Fläche des Querschnitts Anforderungen des Luftverteilungssystems genügt.

4. Rumpf nach Anspruch 3, wobei die Leitung (20) eine Höhe aufweist, die in Abhängigkeit von der Längsposition im Rumpf variabel ist, und wobei der abgesenkte Teil (33) der Querträger (30) für mehrere Träger derselbe ist, um der größten Höhe der Leitung (20) auf einer gegebenen Länge der Leitung (20) Rechnung zu tragen.

5. Rumpf nach einem der Ansprüche 1 bis 4, wobei die multifunktionale Substruktur (200) wenigstens eine Sitzbefestigungsschiene (21) umfasst und wobei die Seitenwand der Leitung (20), an welcher die Schiene befestigt ist, einen sich in Längsrichtung erstreckenden Mittelsteg (23) aufweist und mithilfe dieses Mittelstegs die Sitzbefestigungsschiene (21) an der Wand der Leitung (20) befestigt ist.

6. Rumpf nach einem der Ansprüche 1 bis 5, wobei die multifunktionale Substruktur (200) außerdem wenigstens ein Längsversteifungselement (50) aufweist, das an einer Oberseite der Leitung (20) befestigt oder in diese Oberseite integriert ist.

7. Rumpf nach einem der Ansprüche 1 bis 6, wobei die multifunktionale Substruktur (200) eine Breite aufweist, die im Wesentlichen gleich einem gewünschten Abstand zwischen der Position des Versteifungsprofils (22), um einen äußeren Rand einer Bodenplatte entlang der Verkleidung des Rumpfes (12) abzustützen, und einer ersten Sitzbefestigungsschiene ist, gemessen von der Verkleidung des Rumpfes aus in Richtung einer Längsachse des Rumpfes.

8. Rumpf nach einem der Ansprüche 1 bis 7, wobei in die Leitung (20), in einer Wand der Leitung, elektrische Leiter integriert sind.

9. Rumpf nach einem der Ansprüche 1 bis 8, wobei die Leitung (20) aus mit Harz imprägnierten, elektrisch isolierenden Fasern hergestellt ist.

10. Rumpf nach einem der Ansprüche 1 bis 9, wobei die Sitzbefestigungsschiene (21) und/oder das Versteifungsprofil aus Verbundmaterialien und/oder aus Metalllegierung hergestellt sind.

11. Rumpf nach einem der Ansprüche 1 bis 10, wobei die multifunktionale Substruktur (200) mittels eines Verfahrens der Pultrusion und/oder des Klebens und/oder des Umspritzens vormontiert wird.

12. Verfahren zur Montage eines Rumpfes gemäß einem der Ansprüche 1 bis 11, welches die Verwendung einer multifunktionalen Substruktur (200) umfasst.

13. Verfahren zur Montage eines Rumpfes nach Anspruch 12, wobei die multifunktionale Substruktur (200) auf den Querträgern (30) vor der Verlegung von Bodenplatten, welche die Substruktur bedecken, montiert wird.

14. Luftfahrzeug, welches wenigstens einen Abschnitt eines Rumpfes nach einem der Ansprüche 1 bis 11 aufweist.

## Claims

1. Aircraft fuselage including a fuselage skin, cross-members (30) supporting a floor (40) of the aircraft, and a multifunctional substructure (200), **characterized in that** said multifunctional substructure (200) is fixed to at least one of the cross-members (30) in a lowered part (33) of said cross-member (30) and **in that** said multifunctional substructure comprises:
- at least one duct (20) of an air distribution system having a substantially rectangular section at the location of said at least one cross-member (30) and having lateral walls of said duct (20) that are substantially vertical;
- a seat fixing track (21) or a stiffening profile fixed on a first lateral wall of said duct (20) of the multifunctional substructure (200), and;
- a seat fixing track (21) or a stiffening profile (22) fixed on a second lateral wall, opposite the first lateral wall, of said duct (20) of the multifunctional substructure (200).

2. Fuselage according to Claim 1, wherein the floor (40) covers all or some of the multifunctional substructure (200), said floor bearing on the seat fixing track(s) (21) and/or on the stiffening profile (s) (22).

3. Fuselage according to either of the preceding claims, wherein an upper face of the lowered part (33) of the cross-member (30) is located at a height DH, under a level defined by non-lowered parts of said cross-member, which is suitable for receiving the multifunctional substructure (200) incorporating the duct (20) taking into account a height of said substructure, a section surface of which meets requirements of the air distribution system.

4. Fuselage according to Claim 3, wherein the duct (20) has a height that varies according to the longitudinal position in the fuselage, and wherein the lowered part (33) of the cross-members (30) is common to several beams in order to fit the greatest height of said duct (20) under a given length of said duct (20).

5. Fuselage according to one of Claims 1 to 4, wherein the multifunctional substructure (200) comprises at least one seat fixing track (21) and in which multifunctional substructure the lateral wall of the duct (20) to which said track is fixed includes a longitudinal extension mid-wing (23), through which mid-wing the seat fixing track (21) is fixed to said wall of the duct (20).

6. Fuselage according to one of Claims 1 to 5, wherein the multifunctional substructure (200) further includes at least one longitudinal stiffener (50) fixed to or being incorporated in an upper face of the duct (20).

7. Fuselage according to one of Claims 1 to 6, wherein the multifunctional substructure (200) has a width substantially equal to a desired distance between the position of the stiffening profile (22), for supporting an external edge of a floor panel along the skin of the fuselage (12), and a first seat fixing track, starting from said skin of the fuselage in the direction of a longitudinal axis of the fuselage.

8. Fuselage according to one of Claims 1 to 7, wherein the duct (20) incorporates, in a wall of said duct, electrical conductors.

9. Fuselage according to one of Claims 1 to 8, wherein the duct (20) is produced from resin-impregnated electrically insulating fibres.

10. Fuselage according to one of Claims 1 to 9, wherein the seat fixing track (21) and/or the stiffening profile are produced from composite materials and/or from metal alloy.

11. Fuselage according to one of Claims 1 to 10, wherein the multifunctional substructure (200) is preassembled by a pultrusion and/or bonding and/or overmoulding technique.

12. Method for assembling a fuselage in accordance with one of Claims 1 to 11, including the use of a multifunctional substructure (200).

13. Method for assembling a fuselage according to Claim 12 wherein the multifunctional substructure (200) is assembled on the cross-members (30) before placing floor panels covering said substructure.

14. Aircraft including at least one section of a fuselage according to one of Claims 1 to 11.
